# EUROPÄISCHE PATENTSCHRIFT

(11) **EP 4 129 448 B1**
(45) Veröffentlichungstag und Bekanntmachung des Hinweises auf die Patenterteilung: **02.10.2024**
(21) Anmeldenummer: 22188437.2
(22) Anmeldetag: 03.08.2022
(51) Int. Cl.: B01D 46/00, B01D 46/10

(54) **LUFTFILTER**
AIR FILTER
FILTRE À AIR

(30) Priorität: 03.08.2021 DE 202021104140 U
(43) Veröffentlichungstag der Anmeldung: 08.02.2023
(73) Patentinhaber: Realien GmbH Prozessentwicklung, technische Einrichtungen Ingenieurleistungen, 72666 Neckartailfingen (DE)
(72) Erfinder: Metz, Michael, 72622 Nürtingen (DE)
(74) Vertreter: Schneiders & Behrendt Bochum

(56) Entgegenhaltungen:
- CN-A- 104 748 244
- CN-U- 205 191 754
- KR-Y1- 200 337 081

## Beschreibung

Die Erfindung betrifft einen Luftfilter mit einem Ventilatorgehäuse, wobei das Ventilatorgehäuse eine Zuluft- und eine Abluftseite aufweist, einem in dem Gehäuse angeordneten Ventilator und wenigstens einem Filterelement.

Luftfilter, auch solche mit einem hohen Abscheidegrad für Partikel, Tröpfchen und Aerosole, werden in der Industrie, im Gesundheitswesen, zum Reinigen der Raumluft und in der Reinraumtechnik vielfach eingesetzt. Die Luft wird über einen Ventilator angesaugt und in gereinigter Form, gegebenenfalls auch erwärmt oder gekühlt, an den zu belüftenden Raum abgegeben.

Je nach Einsatzzweck kommt es darauf an, dass das oder die Filterelemente Staubpartikel, Tröpfchen, Aerosole und auch Mikroorganismen zuverlässig aus der gefütterten Luft abschneidet. Filtermaterial mit einem Abscheidungsgrad von mehr als 99,9995 % für Teilchen von 0,1 bis 0,3 µm, sogenannte U15-Filter, sind 41 bekannt. Solche Filtermaterialien werden beispielsweise in Sterilräumen und Operationssälen eingesetzt. Bei erhöhten Anforderungen an die Raumhygiene wären solchermaßen ausgestattete Filterelemente in Ventilatorgehäusen wünschenswert.

Derartige Ventilatorgehäuse sind in mobiler oder stationärer Form im Einsatz. Insbesondere beim Einsatz in Wohnräumen und Konferenzzimmern ist eine Anpassung an das Ambiente des umgebenden Raums wünschenswert. Gegebenenfalls sollte das Dekor auch für den Einsatz in anderer Umgebung anpassbar sein.

Aus KR 200 337 081 Y1 ist ein Luftfilter mit Ventilatorgehäuse bekannt, das eine abnehmbare Abdeckung in Form eines Einlassgitters aufweist. Aus der CN 104 748 244 A geht ein Luftfilter mit Ventilatorgehäuse hervor, dessen obere Abdeckplatte und unteres Chassis mit Magnetstreifen am Gehäuse befestigt sind. Die CN 205191754 U offenbart einen Luftfilter mit Ventilatorgehäuse, bei dem eine Seitenwand magnetisch befestigt ist.

Aufgabe der Erfindung ist es in erster Linie, ein Ventilatorgehäuse bereitzustellen, das über wenigstens ein Filterelement verfügt und in seinem Dekor an die Umgebung auf einfache Art und Weise anpassbar ist. Dies gilt sowohl für die fabrikmäßige Ausstattung - Auslieferung des Luftfilters mit einem gewünschten Dekor - als auch für den Verwender, der die Möglichkeit haben soll, das Dekor bei Änderung des Einsatzortes oder Beschädigung einfach zu ändern. Gleichzeitig soll ein derartiger Luftfilter so mit einem oder mehreren Filterelementen ausgestattet sein, dass diese den Bedürfnissen der Verwender Rechnung tragen.

Dies ist mit einem Luftfilter der eingangs genannten Art erreicht, bei dem das Ventilgehäuse auf den Seitenflächen und der Oberseite eine einstückige Abdeckung aufweist, , die über Haftverbindungen auswechselbar mit dem Ventilatorgehäuse verbunden ist.

Der erfindungsgemäße Luftfilter ist in einem Ventilatorgehäuse angeordnet, dass auf seiner Rückseite (Zuluftseite) Raumluft oder Außenluft angesaugt und über einen Ventilator auf der Frontseite (Abluftseite) in einen Raum abgibt. Rückseite und Frontseite sind in der Regel mit Gittern oder Lamellen versehen, die den Luftdurchtritt ermöglichen. Unterseite, Oberseite und Seitenflächen sind verschlossen und in der Regel aus beschichtetem Kunststoff oder Metall. Auf der Rückseite kann ein Vorfilter angeordnet sein, auf der Frontseite ein Feinfilter und gegebenenfalls, insbesondere zur Geruchsbindung, zwischen Vorfilter und Feinfilter ein Aktivkohlefilter. Das Gehäuse kann auch aus einer Rahmenkonstruktion bestehen, an die die Abdeckungen und Gitter/ Lamellen angeheftet werden.

Die zum Austausch lösbare Abdeckung befindet sich in der Regel auf den Seiten und der Oberseite, bei Wandgeräten auch auf der Unterseite. Zwecks Gestaltung der Frontseite und Rückseite können auch die Gitter oder Lamellen austauschbar sein, um Farbe und/oder Gestaltung zu ändern. Dabei ist die Abdeckung der Seiten und der Oberseite einstückig ausgestaltet, sodass das Dekor über das Gehäuse übergestülpt werden kann.

Die Befestigung der Abdeckungen erfolgt über Haftverbindungen. Solche Haftverbindungen sind insbesondere Klettverbindungen und Magnetverbindungen, die den Vorteil haben, dass die Abdeckungen durch die beim Betrieb des Geräts auftretenden Erschütterungen nicht vibrieren. Schraubverbindungen oder dergleichen stehen in der Regel einer einfachen Anbringung oder einem einfachen Austausch entgegen.

Für die Klettverbindungen ist es ausreichend, entsprechende Klettbänder durchlaufend oder punktuell an Kontaktstellen am Rand des Gehäuses und der Abdeckungen vorzusehen. Entsprechendes gilt für eine magnetische Festlegung, wobei in der Regel eine punktuelle Festlegung ausreichend ist. Besteht das Gehäuse aus einem magnetischen Material - insbesondere Blech - reichen an der Abdeckung punktuell angebrachte Magnete völlig aus. Entsprechendes gilt für austauschbare Gitter und Lamellen an der Frontseite bzw. Rückseite.

Für den Vorfilter und Feinfilter können übliche Filterelemente verwandt werden, insbesondere aus üblichem Filtergewebe oder Faservlies. Die Gestaltung der Filterelemente richtet sich nach dem gewünschten Abscheidegrad. Filterelemente mit hohem Abscheidegrad können durch mehrlagig ausgebildete Filter gestaltet werden, beispielsweise auch durch mehrfaches Falten einer Filterbahn.

Die Funktionsweise dieser Filter beruht auf einem engmaschigen Fasernetz, in dem die herauszufilternden Partikel wirksam zurückgehalten werden. Die Fasern im Filternetz sind unregelmäßig angeordnet, sodass es zwischen den einzelnen Fasern große und kleine Abstände gibt. Dies zwingt die zu filternde Luft, sich einen Weg durch die unregelmäßig angeordneten Fasern zu suchen und dabei ihre Bewegungsrichtung häufig zu ändern. In der Luft enthaltene Teilchen werden dabei aufgrund ihrer Trägheit gegen die Fasern geführt und bleiben daran hängen. Es handelt sich dabei um eine Art Zykloneffekt, der zur Abscheidung führt. Bei kleinen Teilchen spielt auch die Adhäsionskraft eine Rolle. Die Fasern haben beispielsweise eine Faserstärke im Bereich von 10 µm. Als Fasern können grundsätzlich alle textilen Fasern eingesetzt werden, vorzugsweise aber Kunstfasern, Mineralfasern oder Glasfasern, die eine lange Funktionsdauer und die Regenerierung durch beispielsweise Auswaschen erlauben.

Der Vorfilter hat in der Regel ein Abscheidegrad von bis zu 98 %. Dies reicht für eine Abscheidung der gröberen Teilchen völlig aus. Die Feinabscheidung erfolgt im nachgeschalteten Feinfilter.

Der im Filtergehäuse angeordnete Ventilator ist von üblicher Bauart. Je nach Auslegung des Filters kann der Luftvolumenstrom im Bereich von 500 bis 100.000 m³/h betragen. Die zu reinigende Luft wird über den Vorfilter angesogen und durch den Feinfilter abgegeben.

Dem Vorfilter kann ein Aktivkohlefilter nachgeschaltet sein. Hier handelte sich um einen üblichen Aktivkohlefilter, der geeignet ist, Gerüche und Feuchtigkeit zu binden. Hier erfolgt bereits eine erste Abscheidung von Tröpfchen und Aerosolen, samt ihrer Inhaltsstoffe. Insoweit ergänzt der Aktivkohlefilter den Vorfilter und entlastet den Feinfilter.

Der erfindungsgemäße Luftfilter dient insbesondere dazu, Tröpfchen und Aerosole samt der darin eingeschlossenen Fracht abzuscheiden. Tröpfchen und Aerosole bestehen überwiegend aus Wasser, das im Luftstrom, der überwiegend eher trocken ist, verdampft. Die eingeschlossenen Fracht verbleibt dann auf dem Filtermaterial. Soweit es sich dabei um Mikroorganismen handelt, sterben diese ab.

Luftfilter gemäß der Erfindung dienen insbesondere zur Luftentkeimung in geschlossenen Räumen.

Die Erfindung wird durch die beiliegende Abbildung näher erläutert. Es zeigen
Figur 1 eine bevorzugte Ausführungsform eines Luftfilters ohne Gehäuse und
Figur 2 eine erfindungsgemäße Abdeckung.

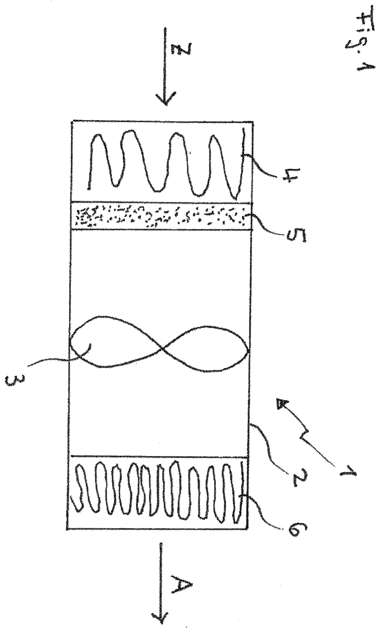

Der Luftfilter 1 gemäß Figur 1 besteht aus einem Filtergehäuse 2, in dem zentral ein Ventilator 3 angeordnet ist. Auf der Zuluftseite Z befindet sich ein Vorfilter 4, vorzugsweise aus einer mehrfach gefalteten Faservliesbahn mit einem Abscheidegrad von bis zu 98 %. Direkt nachgeschaltet ist ein Aktivkohlefilter 5. Auf der Abluftseite A befindet sich der Feinfilter 6, vorzugsweise ein HEPA-Filter mit einem Abscheidegrad von 99,995 %. Der Feinfilter 6 besteht ebenfalls aus einer mehrfach gefalteten Faservliesbahn aus Glasfasern einer Stärke von 10 µm. Alle Filter sind vorzugsweise in Kassetten angeordnet, um einen schnellen Austausch zu ermöglichen. Insbesondere der Vorfilter kann bei Bedarf gereinigt werden. Es hat sich aber gezeigt, dass derartige Luftfilter eine hohe Standzeit haben.

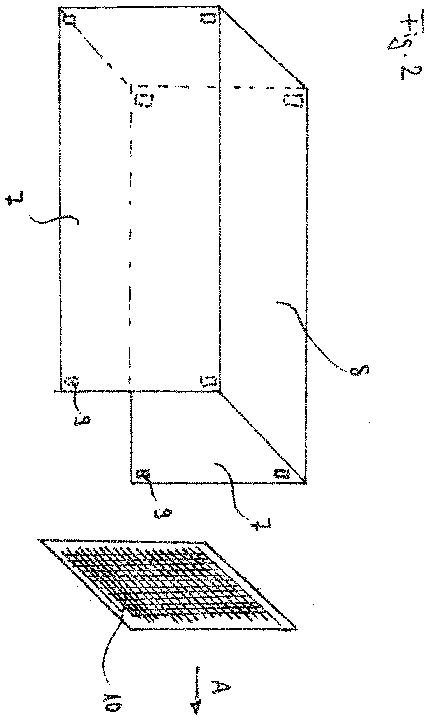

Figur 2 zeigt eine erfindungsgemäße Abdeckung für einen Luftfilter gemäß Figur 1 mit zwei seitlichen Abdeckungen 7 und einer Deckfläche 8, wobei die seitlichen Abdeckungen 7 an gegenüberliegenden Seiten der Deckfläche 8 rechtwinklig festgelegt sind. Jede der seitlichen Abdeckungen 7 ist gegenüberliegend an einer Längsseite der Deckfläche 8 angeordnet und weist in den Eckbereichen Magnete 9 auf, die dazu dienen, die Abdeckungen am Gehäuse 2 des Luftfilters festzulegen. Es versteht sich, dass das Gehäuse 2 aus einem magnetischen Material besteht, entweder aus Blech oder in Form eines Metallrahmens. Die beiden Stirnseiten A und Z sind mit einem Metallgitter 10 abgedeckt, dass fest mit dem Gehäuse verbunden sein kann oder alternativ ebenfalls über Magneten (nicht dargestellt).

Es versteht sich, dass die Haftverbindung alternativ auch als Klettverbindung ausgebildet sein kann, was die Anordnung von Klettbändern sowohl am Gehäuse als auch an den Abdeckungen erfordert. Der Verbindung ermöglicht zum einen einen schnellen Zugang zum Innenleben des Luftfilters und zum anderen den Austausch der Abdeckungen zwecks Anbringung eines anderen Dekors.

Es versteht sich ferner, dass die Abdeckungen, Gitter und Lamellen sowohl aus Metall als auch aus Kunststoff, Stoff, Leder, Holz und dergleichen bestehen können und mit einem vom Kunden gewünschten Dekor oder Anstrich versehen sein können.

## Patentansprüche

1. Luftfilter mit einem Ventilatorgehäuse (2), wobei das Ventilatorgehäuse (2) eine Zuluft- (Z) und eine Abluftseite (A) aufweist, einem in dem Gehäuse (2) angeordneten Ventilator (3) und wenigstens einem Filterelement (4, 6), **dadurch gekennzeichnet, dass** das Ventilatorgehäuse (2) auf den Seitenflächen und der Oberseite eine einstückige Abdeckung (7,8) aufweist, die über Haftverbindungen auswechselbar mit dem Ventilatorgehäuse (2) verbunden ist.

2. Luftfilter mit einem Ventilatorgehäuse nach Anspruch 1, **dadurch gekennzeichnet, dass** die Haftverbindung (9) eine Klettverbindung oder eine Magnetverbindung ist.

3. Luftfilter mit einem Ventilatorgehäuse nach einem der vorstehenden Ansprüche, **dadurch gekennzeichnet, dass** auf der Zuluft-(Z) und/oder Abluftseite (A) über eine Haftverbindung (9) festgelegte Gitter- oder Lamellenflächen angeordnet sind.

4. Luftfilter mit einem Ventilatorgehäuse nach einem der vorstehenden Ansprüche, **gekennzeichnet durch** einen Vorfilter (4) und/oder einen Feinfilter (6) aus einem Filtergewebe oder einem Faservlies.

5. Luftfilter mit einem Ventilatorgehäuse nach Anspruch 4, **gekennzeichnet durch** einen Feinfilter (6) mit einem Abscheidegrad von 99,9995 % für Partikel mit einer Größe zwischen 0,1 und 0,3 µm.

6. Luftfilter mit einem Ventilatorgehäuse nach Anspruch 4 oder 5, **gekennzeichnet durch** einen Vorfilter (4) mit einem Abscheidegrad von 98 % für Partikel mit einer Größe zwischen 0,1 und 0,3 µm.

7. Luftfilter mit einem Ventilatorgehäuse nach einem der Ansprüche 4 bis 6, **gekennzeichnet durch** einen dem Vorfilter nachgeschalteten Aktivkohlefilter (5).

## Claims

1. Air filter comprising a fan housing (2), wherein the fan housing (2) has a feed-air side (Z) and a discharge-air side (A), a fan (3) arranged in the housing (2), and at least one filter element (4, 6), **characterised in that** the fan housing (2) comprises, on the side faces and the upper side, a one-piece cover (7, 8) that is connected exchangeably to the fan housing (2) via adhesive connections.

2. Air filter comprising a fan housing according to claim 1, **characterised in that** the adhesive connection (9) is a hook-and-loop connection or a magnetic connection.

3. Air filter comprising a fan housing according to either one of the preceding claims, **characterised in that** grate or slat faces are arranged on the feed-air side (Z) and/or discharge-air side (A) via an adhesive connection (9).

4. Air filter comprising a fan housing according to any one of the preceding claims, **characterised by** a pre-filter (4) and/or a fine filter (6) made of a filter fabric or a nonwoven fabric.

5. Air filter comprising a fan housing according to claim 4, **characterised by** a fine filter (6) with a degree of separation of 99.9995% for particles with a size between 0.1 and 0.3 µm.

6. Air filter comprising a fan housing according to claim 4 or 5, **characterised by** a pre-filter (4) with an efficiency of 98% for particles with a size between 0.1 and 0.3 µm.

7. Air filter comprising a fan housing according to any one of claims 4 to 6, **characterised by** an activated carbon filter (5) downstream of the pre-filter.

## Revendications

1. Filtre à air avec un boîtier de ventilateur (2), le boîtier de ventilateur (2) présentant un côté d'air entrant (Z) et un côté d'air sortant (A), un ventilateur (3) agencé dans le boîtier (2) et au moins un élément filtrant (4, 6), **caractérisé en ce que** le boîtier de ventilateur (2) présente sur les surfaces latérales et le côté supérieur un couvercle (7, 8) d'une seule pièce, qui est relié de manière interchangeable au boîtier de ventilateur (2) par des liaisons adhésives.

2. Filtre à air avec un boîtier de ventilateur selon la revendication 1, **caractérisé en ce que** la liaison adhésive (9) est une liaison auto-agrippante ou une liaison magnétique.

3. Filtre à air avec un boîtier de ventilateur selon l'une quelconque des revendications précédentes, **caractérisé en ce que** des surfaces de grille ou de lamelles fixées par une liaison adhésive (9) sont agencées sur le côté d'air entrant (Z) et/ou d'air sortant (A).

4. Filtre à air avec un boîtier de ventilateur selon l'une quelconque des revendications précédentes, **caractérisé par** un préfiltre (4) et/ou un filtre fin (6) en un tissu filtrant ou une nappe de fibres.

5. Filtre à air avec un boîtier de ventilateur selon la revendication 4, **caractérisé par** un filtre fin (6) avec un degré de séparation de 99,9995 % pour les particules d'une taille comprise entre 0,1 et 0,3 µm.

6. Filtre à air avec un boîtier de ventilateur selon la revendication 4 ou 5, **caractérisé par** un préfiltre (4) avec un degré de séparation de 98 % pour les particules d'une taille comprise entre 0,1 et 0,3 µm.

7. Filtre à air avec un boîtier de ventilateur selon l'une quelconque des revendications 4 à 6, **caractérisé par** un filtre à charbon actif (5) placé en aval du préfiltre.
